**Europäisches Patentamt**

**European Patent Office**

**Office européen des brevets**

(19)

(11) Veröffentlichungsnummer : **0 028 713**
**B1**

(12) **EUROPÄISCHE PATENTSCHRIFT**

(45) Veröffentlichungstag der Patentschrift :
**28.04.82**

(21) Anmeldenummer : **80106157.3**

(22) Anmeldetag : **10.10.80**

(51) Int. Cl.³ : **C 09 D 7/12, C 08 L 91/06**

(54) **Lackmattierungsmittel auf Wachsbasis, Verfahren zu seiner Herstellung und Mattlacke.**

(30) Priorität : **20.10.79 DE 2942487**

(43) Veröffentlichungstag der Anmeldung :
**20.05.81 (Patentblatt 81/20)**

(45) Bekanntmachung des Hinweises auf die Patenterteilung : **28.04.82 Patentblatt 82/17**

(84) Benannte Vertragsstaaten :
**AT BE CH DE FR GB IT LI NL SE**

(56) Entgegenhaltungen :
**DE - A - 2 113 990**
**DE - A - 2 601 602**

(73) Patentinhaber : **HOECHST AKTIENGESELLSCHAFT**
**Postfach 80 03 20**
**D-6230 Frankfurt/Main 80 (DE)**

(72) Erfinder : **Petz, Karl, Dr.**
**Von-Richthofen-Strasse 10**
**D-8901 Neusäss (DE)**
Erfinder : **Rieger, Klaus, Dr.**
**Altvaterstrasse 3**
**D-8906 Gersthofen (DE)**
Erfinder : **Steidl, Dieter**
**Ulmenstrasse 8**
**D-6238 Hofheim am Taunus (DE)**

## Lackmattierungsmittel auf Wachsbasis, Verfahren zu seiner Herstellung und Mattlacke

Durch Einarbeitung fester Stoffe in sehr feiner Verteilung in Anstrichmitteln erhält man Systeme, die das einfallende Licht diffus streuen. Der Brechungsindex des zugesetzten Mattierungsmittels soll demjenigen des Bindemittels nahekommen, so daß die Anwesenheit des Mattierungsmittels im Lackfilm bei durchfallendem Licht praktisch nicht zu erkennen ist.

Neben anorganischen Mattierungsmitteln ist die Verwendung von Wachsen unterschiedlicher Zusammensetzung zur Lackmattierung seit vielen Jahren bekannt (Handbuch der Nitrocelluloselacke, Kraus, Teil 2, Seite 116, Seifen — Öle — Fette — Wachse, 102. Jahrg. Nr. 6/1976, Seite 163). Üblicherweise mußten die Wachse aufgeschmolzen werden und durch Einarbeiten in den Lack oder das Lösemittel und Kaltrühren erhielt man frei fließende Dispersionen oder pastenartige Zubereitungen, mit denen man dann in gewünschter Weise die Lacke mattieren konnte. Dieses Verfahren war zeitaufwendig und risikoreich hinsichtlich einer Brandgefahr.

Um diese Schwierigkeiten zu umgehen, sind seit einigen Jahren mikronisierte Kohlenwasserstoffwachse im Handel, die sich durch ihre leichte Einarbeitbarkeit ohne Zuhilfenahme von Wärme bewährt haben (Aufsatz « Mattierungsmittel für Lacke » in « Adhäsion », Novemberheft 1977 ; « Lacke und Lösemittel », Verlag Chemie, Seite 15). Eine Kombination mit Mattierungsmitteln auf anorganischer Basis ist durchaus üblich. Die Erfahrung mit wachsartigen Mattierungsmitteln hat gezeigt, daß besonders Polyethylenwachs-Feinstpulver mit einer Kornverteilung im Bereich um 10 bis 15 Mikron als Obergrenze die von der Lackindustrie gestellten Anforderungen bestens erfüllen können und in mancher Hinsicht anders zusammengesetzten Mattierungsmitteln überlegen sind. Solche Feinstpulver sind z.B. in der DE-OS 2 713 550 beschrieben. Sie bestehen aus einem ternären Gemisch eines Polyolefinwachses mit einem Esterwachs bzw. einem teilverseiften Esterwachs und einem Diester einer Monocarbonsäure mit einem Diol oder einem Monocarbonsäurediamid und werden durch Versprühen der Wachsschmelzenmischung und anschließende Sichtung auf eine Kornverteilung von 60 bis 80 % zwischen 1 bis 15 Mikron eingestellt.

Ein derartiges Verfahren ist technisch aufwendig und damit teuer. Da es andererseits erfahrungsgemäß sehr schwierig ist, Polyolefinwachse durch mechanische Zerkleinerung in einem einzigen Verfahrensschritt in den für die Lackmattierung notwendigen Korngrößenbereich überzuführen [Farbe und Lack, 80. Jahrg., Nr. 4 (1974)], war es Aufgabe der vorliegenden Erfindung, einen Weg aufzuzeigen, der zu Feinstpulvern führt, die nicht nur den gewünschten Mattierungseffekt zu erreichen gestatten, sondern darüber hinaus auch leicht in den zu mattierenden Lacken dispergiert werden können und die der so erhaltenen Lackoberfläche einen glatten, samtartigen Griff sowie gute Widerstandsfähigkeit gegen Verkratzen und das sog. « Blankreiben » geben.

Überraschenderweise wurde gefunden, daß sich Polyolefinwachse dann mühelos bis zur gewünschten Kornfeinheit durch Mahlen zerkleinern lassen, wenn man bei der Mahlung hartes und sprödes Amidwachs zusetzt.

Die Erfindung betrifft daher ein Verfahren zur Herstellung eines Lackmattierungsmittels auf Wachsbasis mit einer Korngrößenverteilung von 99 Gew.-% < 15 Mikron, welches dadurch gekennzeichnet ist, daß man ein Polyolefinwachs vom durchschnittlichen Molekulargewicht 1 000 bis 9 000 und ein Amidwachs mit einem Fließ/Tropfpunkt von 130 bis 150 °C im Gewichtsverhältnis 90 : 10 bis 10 : 90 einer gemeinsamen Mahlung unterwirft.

Sie betrifft des weiteren die nach diesem Verfahren hergestellten Lackmattierungsmittel sowie Lacke, die solche Lackmattierungsmittel enthalten.

Nach der erfindungsgemäßen Arbeitsweise gelingt es bei energetisch vertretbarem Aufwand, die gewünschten Feinstpulver mit einer Korngröße von 99 Gew.-% < 15 Mikron in — bezogen auf die Einsatzmenge — praktisch quantitativer Ausbeute zu erhalten, ohne daß eine zusätzliche Sichtung erforderlich ist. Dies war nicht zu erwarten und ist als erheblicher technischer Fortschritt anzusehen.

Was die Wirksamkeit der erfindungsgemäß hergestellten Feinstpulver betrifft, so stellte sich heraus, daß der Amidwachsanteil in den Lackmattierungsmitteln zwar kaum zur mattierenden Wirkung beiträgt, jedoch überraschenderweise die Einflüsse der Mattierungskomponente auf die Lackoberfläche durch Verbesserung des Gleiteffektes und die daraus resultierende Unempfindlichkeit gegenüber Verkratzungen merklich unterstützt. Dies ließ sich keineswegs vorhersehen. Es mußte vielmehr angenommen werden, daß das Amidwachs lediglich als Mahlhilfsmittel fungiere und seine Anwesenheit zumindest bei höheren Konzentrationen sich eher als nachteilig erweisen würde bezüglich Überstreichbarkeit und Haftung.

Unter Polyolefinwachsen, die den einen Bestandteil der erfindungsgemäßen Mattierungsmittel darstellen, werden Homo- und Copolymerisate des Ethylens, Propylens und Butylens mit Schmelzintervallen im Bereich von 90 bis 140 °C und einem Durchschnittsmolekulargewicht von 1 000 bis 9 000, vorzugsweise 2 000 bis 4 000 verstanden. Bevorzugt sind Ethylen-Propylen-Copolymerisate mit überwiegendem Ethylenanteil.

Geeignete Amidwachse sind Umsetzungsprodukte technischer Fettsäuren mit 12 bis 34, vorzugsweise 12 bis 18 C-Atomen mit bivalenten aliphatischen Aminen mit 2 bis 6 C-Atomen, wie z.B. Ethylen-, Propylen- und Hexamethylendiamin, die Fließ/Tropfpunkte von 130 bis 150, vorzugsweise 140 bis 145 °C aufweisen. Ein bevorzugtes Amidwachs ist Di-stearoylethylendiamid.

Für die gemeinsame Mahlung von Polyolefinwachs und Amidwachs sind beispielsweise Strahl-

0 028 713

mühlen oder mechanische Mühlen mit integrierter Sichtung geeignet.

Bei der Mahlung wird so vorgegangen, daß man die beiden Wachskomponenten in Pulver-, Granulat- oder Schuppenform entweder bereits gemischt oder vorteilhafter nebeneinander der Mühle zuführt. Das Gewichtsverhältnis von Polyolefinwachs zu Amidwachs liegt bei 90 : 10 bis 10 : 90, vorzugsweise bei 70 : 30 bis 30 : 70 und insbesondere bei 60 : 40 bis 40 : 60.

Das erfindungsgemäß gewonnene Feinstpulver läßt sich aufgrund seiner guten Dispergierfähigkeit ohne weiteres mit den üblichen Rührwerken oder Dissolvern kalt in die zu mattierenden Lacksysteme einarbeiten. Je nach gewünschtem Matteffekt, der, wie bereits erwähnt, im wesentlichen durch den Polyolefinwachs-Anteil in der Mischung bestimmt wird, reichen im Falle nicht pigmentierter Lacke Zusätze von 1 bis 4 Gew.-% des pulverförmigen Mattierungsmittels, bezogen auf das Lacksystem, aus. Bei pigmentierten Anstrichstoffen sind höhere Mattierungszusätze notwendig. Eine Vordispergierung in den jeweils angewandten Lösemitteln kann die Verteilung im Lack beschleunigen.

Die nachstehenden Beispiele dienen der weiteren Erläuterung des Verfahrens und zeigen ferner den Einsatz der Verfahrensprodukte in einigen typischen Lack- bzw. Farbzubereitungen. Die angegebenen Teile sind stets Gewichtsteile.

## Beispiel 1

Einer Gegenstrom-Prallmühle, die aus einer Mahlzone und einem integrierten Windsichter besteht, werden stündlich 250 kg einer Wachsmischung zugeführt. Die Wachsmischung ist eine grobe 1 : 1-Mischung aus sprühkonfektioniertem Distearoyl-Ethylendiamid mit Partikelgrößen < 400 μ und einem schnittgranulierten Polyethylenwachs (Aufbaupolyethylenwachs vom Molgewicht ca. 3 000, Tropfpunkt 122 bis 127 °C) mit Kantenlängen von 2 bis 4 mm.

Die Produktaufgabe erfolgt über eine Dosierschnecke in den Windsichter. Von dort gelangen die Teilchen, die nicht den Feinheitsanforderungen genügen, durch zwei einander gegenüberliegende, mit Druckluft betriebene Injektoren in die Mahlzone. Sie prallen dabei frontal aufeinander und werden dadurch mikronisiert.

Das aus der Mühle austretende Mahlgut wird mit der Luftströmung pneumatisch in einen Silo mit einem Belüftungsfilter ausgetragen. Der Druckluftbedarf beträgt bei diesem Durchsatz 34 Nm³/min bei 7 bar und 20 °C. Die Rotordrehzahl des Sichters ist auf 4 000 UpM eingestellt. Nach einer Anfahrzeit von ca. 15 Minuten hat sich im die Mühle verlassenden Mahlgut das 1 : 1-Mischungsverhältnis der Mahlkomponenten eingestellt. Nach der Coulter Counter Analyse besitzt das gemahlene Produkt eine Gewichtsverteilung von über 99 % kleiner 14 μ und 50 % kleiner 4,5 μ.

## Beispiel 2

In eine mechanische Sichtermühle mit vertikaler Achse werden 69 kg/h der in Beispiel 1 verwendeten Wachsmischung über eine Dosierschnecke eingeführt. Die Mühle ist eine Kombination einer Prallschlägermühle mit einem Schaufelradsichter. Sie ist ausgerüstet mit einem tangentialen Materialeintrag und einem Frischluftansaugkanal.

Das bei der Mühlendrehzahl von 4 000 UpM $^{-1}$, der Sichterdrehzahl von 2 200 UpM $^{-1}$ und bei einem Luftdurchsatz von 3 100 m³/h aus der Mühle ausgetragene Feingut hat eine Partikelgrößenverteilung von 99,5 % < 14,3 μ. Die 50 %-Grenze liegt bei 6,0 μ.

## Beispiel 3

Es wird ein Lackansatz hergestellt aus

15 Gew.-Teilen Kollodiumwolle (feucht), mittelviskos
10 Gew.-Teilen eines Cyclohexanonharzes (Ketonharz N der BASF AG),
 8 Gew.-Teilen Dioctylphthalat,
 2 Gew.-Teilen Rizinusöl,
35 Gew.-Teilen Butylacetat,
10 Gew.-Teilen n-Butanol,
10 Gew.-Teilen Ethylglykol und
10 Gew.-Teilen Toluol

in welchen man ein nach Beispiel 1 erhaltenes Mattierungsmittel durch 30minutiges Rühren mit 3 000 UpM einarbeitet. Der Lack wird auf Glasplatten in einer Naßfilmstärke von 30 μ aufgetragen. Nach 24stündigem Trocknen mißt man den Mattierungseffekt mit dem Glanzmeßgerät nach Dr. B. Lange.

| Wachszusatz in Gew.-%, bezogen auf Lack | 0 | 0,25 | 0,5 | 1,0 | 2,0 |
|---|---|---|---|---|---|
| Glanz nach 24 Stunden in % | 100 | 46 | 35 | 28 | 8 |

3

Ein Aufpolieren der lackierten Flächen (Belastung 750 g, 100 Bürstenstriche) ist nicht möglich.

Beispiel 4

Ein feuchtigkeitshärtender Polyurethanlack mit 42 % Feststoffgehalt (Beckocoat PU 428 der Firma HOECHST AG) wird wie in Beispiel 3 angegeben mit dem nach Beispiel 1 erhaltenen Feinstpulver mattiert.

| Wachszusatz in Gew.-%, bezogen auf Lack | 0 | 0,25 | 0,5 | 1,0 | 2,0 |
|---|---|---|---|---|---|
| Glanz nach 24 Stunden in % | 100 | 87 | 75 | 60 | 40 |

Der Mattlackfilm ist nicht aufpolierbar.

Beispiel 5

Ein säurehärtender Lack mit 40 % Feststoffgehalt (Beckurol HP 310 der Firma HOECHSTAG), dem auf 100 Teile Lackansatz als Härter 1 Teil p-Toluolsulfonsäure, gelöst in 19 Teilen n-Butanol, zugefügt werden, wird mit dem Polyethylenwachs-Feinstpulver nach Beispiel 1 mattiert. Die Lackfilme werden wie in Beispiel 3 angegeben geprüft. Sie sind nicht nachpolierbar.

| Wachszusatz in Gew.-%, bezogen auf Lacksystem | 0 | 0,25 | 0,5 | 1,0 | 2,0 |
|---|---|---|---|---|---|
| Glanz nach 24 Stunden in % | 100 | 55 | 40 | 35 | 20 |

Beispiel 6

Zur Herstellung eines weiß-pigmentierten Mattlackes kam das Mattierungsmittel nach Beispiel 2 in folgender Rezeptur zum Einsatz, wobei man das Mattierungsmittel zunächst in die Weißpigmente einmischte, worauf diese Mischung gemeinsam mit dem Binde- und Lösemittel auf einer Trichtermühle abgerieben wurde :

35 Gew.-Teile eines Leinölalkydharzes mit 62 % Öl (Alftalat AL 650 der HOECHST AG),
30 Gew.-Teile Testbenzin,
15 Gew.-Teile Titandioxid,
9 Gew.-Teile gecoatete Kreide (Millicarb der Firma Plüss-Stauffer),
1 Gew.-Teil eines Sikkativs auf Co-Pb-Mn-Basis.

Die Prüfung der Lackfilme erfolgte wie in Beispiel 3 angegeben. Die Filme sind nicht nachpolierbar.

| Wachszusatz in Gew.-%, bezogen auf Lack | 0 | 5 | 10 |
|---|---|---|---|
| Glanz nach 24 Stunden in % | 100 | 48 | 24 |

**Ansprüche**

1. Verfahren zur Herstellung eines Lackmattierungsmittels auf Wachsbasis mit einer Korngrößenverteilung von 99 Gew.-% < 15 Mikron, dadurch gekennzeichnet, daß man ein Polyolefinwachs vom durchschnittlichen Molekulargewicht 1 000 bis 9 000 und ein Amidwachs mit einem Fließ/Tropfpunkt von 130 bis 150 °C im Gewichtsverhältnis 90 : 10 bis 10 : 90 einer gemeinsamen Mahlung unterwirft.

2. Verfahren nach Anspruch 1, dadurch gekennzeichnet, daß das Amidwachs das Umsetzungsprodukt aus einer Fettsäure mit 12 bis 34 C-Atomen und einem bivalenten aliphatischen Amin mit 2 bis 6 C-Atomen ist.

3. Lackmattierungsmittel auf Wachsbasis, welches aus 10 bis 90 Gew.-% eines Polyolefinwachses vom mittleren Molekulargewicht 1 000 bis 9 000 und 90 bis 10 Gew.-% eines Amidwachses besteht und ein homogenes Feinstpulver mit einer Korngrößenverteilung von 99 Gew.-% < 15 Mikron darstellt, erhalten nach Anspruch 1.

4. Verwendung von Amidwachsen aus einer Fettsäure mit 12 bis 34 C-Atomen und einem bivalenten aliphatischen Amin mit 2 bis 6 C-Atomen als Hilfsmittel bei der Mahlung von Polyolefinwachs vom mittleren Molgewicht 1 000 bis 9 000 zu einem Feinstpulver mit einer Korngrößenverteilung von 99 Gew.-% < 15 Mikron für die Lackmattierung.

5. Verwendung nach Anspruch 4, dadurch gekennzeichnet, daß das Gewichtsverhältnis Polyolefinwachs : Amidwachs 90 : 10 bis 10 : 90 beträgt.

6. Mattlacke, die ein nach Anspruch 1 hergestelltes Mattierungsmittel enthalten.

**Claims**

1. A process for the manufacture of a dulling agent on the basis of wax for varnishes 99 % of which have a grain size distribution of less than 15 microns, which comprises subjecting a polyolefin wax having an average molecular weight of from 1 000 to 9 000 and an amide wax having a yield/drop point of from 130 to 150 °C to common grinding in a weight ratio of from 90 : 10 to 10 : 90.

2. The process as claimed in Claim 1, wherein the amide wax is the reaction product of a fatty acid having from 12 to 34 carbon atoms and a bivalent aliphatic amine having from 2 to 6 carbon atoms.

3. Dulling agent on the basis of wax consisting substantially of from 10 to 90 weight % of a polyolefin wax having an average molecular weight of from 1 000 to 9 000, and from 90 to 10 weight % of an amide wax, present in the form of a homogeneous micro-powder 99 weight % of which have a grain size of less than 15 microns, and obtained as claimed in Claim 1.

4. Use of amide waxes from a fatty acid having from 12 to 34 carbon atoms and a bivalent aliphatic amine having from 2 to 6 carbon atoms as auxiliary in the grinding of polyolefin wax having an average molecular weight of from 1 000 to 9 000 to yield a micro-powder 99 % of which have a grain size of less than 15 microns for the dulling of varnishes.

5. Use as claimed in Claim 4, wherein the weight ratio of polyolefin wax to amide wax is from 90 : 10 to 10 : 90.

6. Dull varnishes containing a dulling agent obtained as claimed in Claim 1.

**Revendications**

1. Procédé pour produire un agent de matité de vernis, à base de cires dont la granulométrie est telle que 99 % en poids des grains ont moins de 15 microns, procédé caractérisé en ce qu'on soumet une cire de polyoléfine, d'un poids moléculaire moyen de 1 000 à 9 000, et une cire d'amide présentant un point d'écoulement/goutte de 130 à 150 °C, en mélange selon un rapport de 90 : 10 à 10 : 90, à un broyage de mouture en commun.

2. Procédé selon la revendication 1, caractérisé en ce que la cire d'amide est le produit de réaction d'un acide gras comportant 12 à 34 atomes de carbone et d'une amine aliphatique bivalente comportant 2 à 6 atomes de carbone.

3. Agent de matité pour vernis, à base de cires, consistant en 10 à 90 % en poids d'une cire de polyoléfine d'un poids moléculaire moyen de 1 000 à 9 000 et en 90 à 10 % en poids d'une cire d'amide et se présentant sous forme d'une poudre homogène très fine dont la granulométrie est telle que 99 % en poids des particules ont moins de 15 microns, agent caractérisé en ce qu'il est obtenu selon la revendication 1.

4. Application de cire d'amide, obtenue à partir d'un acide gras ayant 12 à 34 atomes de carbone, et d'une amine aliphatique bivalente ayant 2 à 6 atomes de carbone, comme adjuvant lors du broyage d'une cire de polyoléfine d'un poids moléculaire moyen de 1 000 à 9 000 pour l'obtention d'une poudre très fine dont la granulométrie est telle que 99 % en poids des granules ont moins de 15 microns et qui est destinée à rendre des vernis mats.

5. Application selon la revendication 4, caractérisée en ce que le rapport pondéral entre la cire de polyoléfine et la cire d'amide se situe entre 90 : 10 et 10 : 90.

6. Vernis mats, caractérisés en ce qu'ils contiennent un agent de matité produit selon la revendication 1.